# DEMANDE DE BREVET EUROPEEN

(11) **EP 1 701 065 A1**
(43) Date de publication de la demande: **13.09.2006**
(21) Numéro de dépôt: 06300174.7
(22) Date de dépôt: 28.02.2006
(51) Int. Cl.: F16H 57/04

(54) **Agencement pour entraîner en rotation une pompe hydraulique dans une boîte de vitesses et boîte de vitesse dotée d'un tel agencement**

(30) Priorité: 11.03.2005 FR 0502429
(71) Demandeur: Renault s.a.s., 92100 Boulogne Billancourt (FR)
(72) Inventeur: Buannec, Michel, 78480 Verneuil sur Seine (FR); Cloud, Philippe, 92500 Rueil Malmaison (FR)

(57) **Abrégé**

Pour entraîner une pompe hydraulique (5) rotative, l'agencement selon l'invention comprend un module d'entraînement (2) permettant la liaison dans la boîte de vitesse entre un arbre menant et la pompe (5) rotative. Le module d'entraînement (2) comporte avantageusement un premier organe d'entraînement (3) à deux pignons coaxiaux (31, 32) solidaires entre eux et mobiles en rotation selon un premier axe (30) parallèle à l'arbre menant, le premier de ces pignons (31) étant prévu pour recevoir le mouvement de rotation de l'arbre menant et le second de ces pignons (32) étant prévu pour transmettre ce mouvement de rotation à un deuxième organe d'entraînement (4) mobile en rotation selon un axe parallèle à l'axe de rotation de la pompe et concourant audit premier axe (30), le deuxième organe d'entraînement (4) étant rendu solidaire en rotation de l'arbre d'entraînement (6) de la pompe hydraulique (5).

## Description

### DOMAINE TECHNIQUE DE L'INVENTION

La présente invention concerne des configurations d'entraînement pour des pompes hydrauliques dans le domaine automobile. L'invention concerne plus particulièrement un agencement pour entraîner en rotation une pompe hydraulique dans une boîte de vitesse ainsi qu'une boîte de vitesse dotée d'un tel agencement.

### ARRIERE-PLAN TECHNOLOGIQUE DE L'INVENTION

Dans un véhicule motorisé, la boîte de vitesses comprend habituellement un carter à l'intérieur duquel se trouvent un certain nombre de pignons pouvant s'engrener les uns sur les autres pour assurer la démultiplication ou la surmultiplication. Ces arbres sont soit parallèles, soit dans le prolongement l'un de l'autre (le plus souvent les deux, la boîte ayant 3 arbres). Ces pignons tournant à très grande vitesse, ils sont lubrifiés en permanence par l'huile contenue dans le carter. La commande des vitesses est soit mécanique, soit automatique.

Il est connu que les pompes hydrauliques disposées dans les boîtes de vitesses sont entraînées en rotation par utilisation du mouvement rotatif de l'arbre d'entrée, qui peut correspondre à l'arbre de sortie du moteur. Dans le cas où la commande des vitesses est mécanique, les pignons sont à taille oblique. Dans le cas où la commande des vitesses est automatique, les pignons sont du type épicylcoïdal : un pignon central appelé le planétaire est entouré de trois pignons qui tournent sur lui, ces pignons voisins étant appelés satellites.

Dans les boîtes de vitesses automatiques existantes, une pompe hydraulique rotative assurant les fonctions d'alimentation d'un circuit hydraulique est entraînée en rotation par un arbre menant, par exemple l'arbre d'entrée, pouvant traverser toute la boîte de vitesses. La pompe hydraulique peut aussi être entraînée en rotation par un train d'engrenages couplé à l'arbre d'entrée. Dans tous les cas, la pompe est disposée à une extrémité de la boîte de vitesses et peut tourner autour d'un axe de rotation concentrique ou parallèle à l'arbre d'entrée. Un tel agencement, pour lequel la pompe entre directement dans l'empilage de la boîte de vitesses, présente l'inconvénient d'allonger le carter et donc d'augmenter l'encombrement de la boîte de vitesses.

### DESCRIPTION GENERALE DE L'INVENTION

La présente invention a donc pour objet de pallier un ou plusieurs des inconvénients de l'art antérieur en proposant dans une boîte de vitesse un agencement permettant de réduire l'encombrement lié à la pompe hydraulique tout en assurant l'entraînement en rotation de cette pompe.

Un objectif supplémentaire de l'invention est de proposer un agencement offrant un choix de démultiplication pour la pompe hydraulique.

Ce but est atteint par un agencement pour entraîner en rotation une pompe hydraulique dans une boîte de vitesse, l'agencement comprenant un module d'entraînement apte à permettre la liaison dans la boîte de vitesse entre un arbre menant et une pompe hydraulique du type rotative autour d'un axe aligné avec un arbre d'entraînement de la pompe hydraulique, caractérisé en ce que le module d'entraînement comporte un premier organe d'entraînement disposant de deux pignons coaxiaux solidaires entre eux et mobiles en rotation selon un premier axe parallèle à l'arbre menant, le premier de ces pignons étant prévu pour recevoir le mouvement de rotation de l'arbre menant et le second de ces pignons étant prévu pour transmettre ce mouvement de rotation à un second organe d'entraînement mobile en rotation selon un axe parallèle à l'axe de rotation de la pompe et concourant audit premier axe, le second organe d'entraînement étant rendu solidaire en rotation de l'arbre d'entraînement de la pompe hydraulique.

Ainsi, il est permis selon l'invention de ne plus aligner l'arbre d'entraînement de la pompe avec l'arbre d'entrée de la boîte de vitesses.

Selon une autre particularité, le module d'entraînement est doté de moyens de support comprenant, dans un premier plan orthogonal aux pignons, une première partie support pour porter ledit premier organe d'entraînement et, dans un second plan transversal par rapport au premier plan, une seconde partie support pour porter le second organe d'entraînement.

Selon une autre particularité, le premier organe d'entraînement est du type à pignon double ou diabolo et comprend sur son premier pignon une denture droite ou hélicoïdale adaptée pour recevoir dans un premier rapport de vitesses déterminé le mouvement de rotation de l'arbre menant et sur son second pignon une denture conique ou spiroconique adaptée pour transmettre dans un second rapport de vitesses déterminé le mouvement de rotation reçu par l'intermédiaire du premier pignon.

Ainsi, l'invention offre avantageusement un choix de démultiplication pour l'entraînement de la pompe.

Selon une autre particularité, le premier organe d'entraînement comprend sur le premier pignon une denture ayant un diamètre déterminé permettant l'engrenage avec un pignon de l'arbre menant, et sur le second pignon, une denture ayant un diamètre déterminé inférieur au diamètre du premier pignon permettant l'engrenage avec un pignon du second organe d'entraînement.

Selon une autre particularité, les moyens de support comportent une portion pour relier lesdites première et secondes parties support et ayant avec ces dernières un profil en L.

Selon une autre particularité, la première partie support comprend au moins un élément de butée à position axiale réglable pour guider axialement les pignons du premier organe d'entraînement.

Selon une autre particularité, la seconde partie support comprend au moins un élément de butée à position axiale réglable pour guider axialement le pignon du second organe d'entraînement.

Selon une autre particularité, le second organe d'entraînement est rendu solidaire en rotation de l'arbre d'entraînement de la pompe hydraulique par l'intermédiaire d'un dispositif à rotule sphérique permettant des degrés de liberté angulaire et d'alignement entre l'arbre d'entraînement de la pompe hydraulique et l'axe de rotation du second organe d'entraînement, un dispositif à rotule sphérique étant également prévu pour la liaison entre la pompe et son arbre d'entraînement.

L'invention propose également une boîte de vitesses de liaison entre au moins un arbre de sortie d'un moteur et un arbre de sortie de la boîte de vitesses, comprenant une pompe hydraulique et un carter incorporant des arbres à engrenages selon au moins un axe longitudinal parallèle à un arbre de sortie du moteur, caractérisée en ce que le carter est doté de l'agencement selon l'invention pour entraîner en rotation la pompe hydraulique, de façon à disposer ladite pompe dans une direction à composante radiale par rapport à l'axe longitudinal.

Ainsi, l'invention permet de proposer des boîtes de vitesses plus compactes, la longueur de la boîte de vitesses pouvant être sensiblement réduite.

L'invention, avec ses caractéristiques et avantages, ressortira plus clairement à la lecture de la description faite en référence aux dessins annexés dans lesquels :
- la figure 1 est une vue en perspective illustrant un agencement pour entraîner une pompe à eau suivant un mode de réalisation de l'invention,
- les figures 2A et 2B représentent respectivement une vue de face et une vue en coupe de profil d'un agencement analogue à celui de la figure 1.

### DESCRIPTION DES MODES DE REALISATION PREFERES DE L'INVENTION

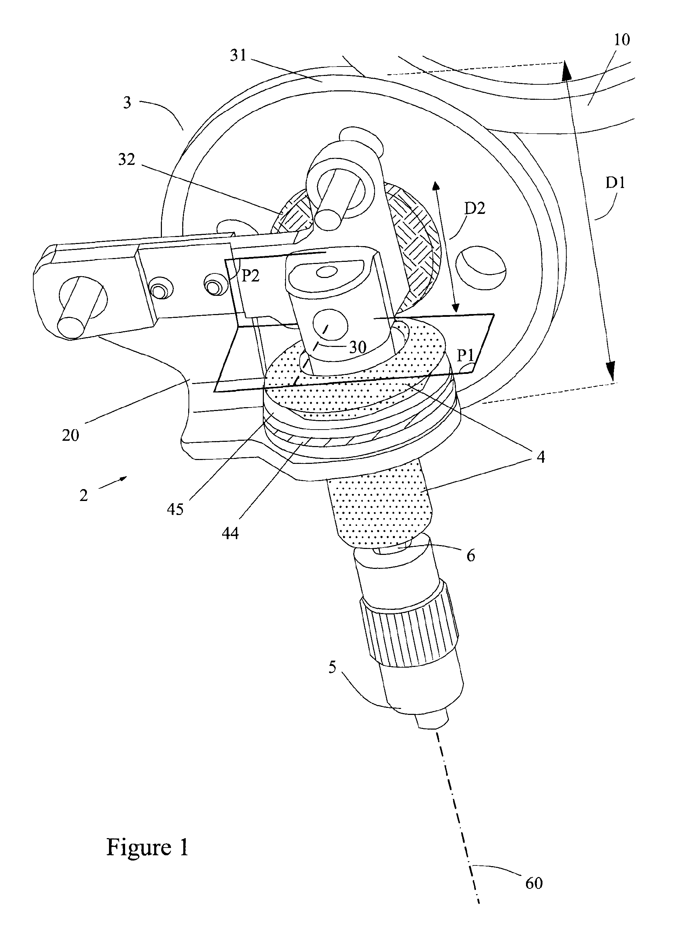

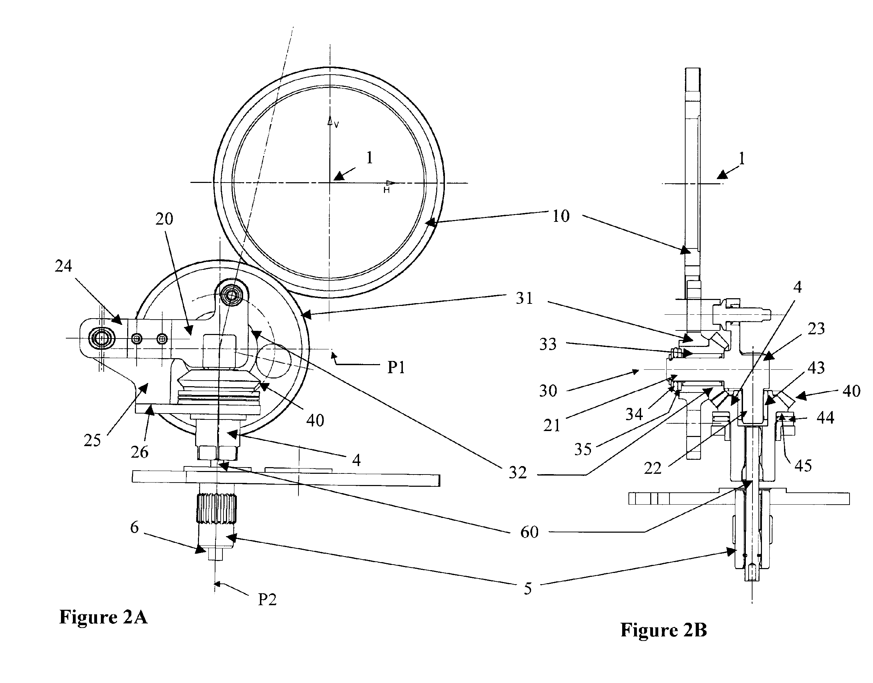

L'agencement illustré dans les figures 1, 2A et 2B permet d'entraîner en rotation une pompe hydraulique (5), l'entraînement de la pompe (5) s'effectuant à partir d'un pignon (10) d'un arbre menant (1), par exemple l'arbre d'entrée. Cet arbre menant (1) peut correspondre à un arbre de sortie du moteur ou un arbre parallèle entraîné en rotation. L'arbre menant (1) s'étend suivant la longueur de la boîte de vitesse tandis que la pompe s'étend, conformément à l'enseignement de la présente invention, transversalement dans la boîte de vitesses.

En référence à la figure 1, l'agencement de l'invention prévoit un module d'entraînement (2) pour permettre dans la boîte de vitesse la liaison entre l'arbre menant (1) et la pompe hydraulique (5). De façon connue en soi, la pompe hydraulique peut être du type rotative autour d'un axe (60) aligné avec un arbre d'entraînement (6) de la pompe hydraulique (5). Dans le mode de réalisation préféré de l'invention, le module d'entraînement (2) comporte un premier organe d'entraînement (3) disposant de deux pignons coaxiaux (31, 32) et un second organe d'entraînement (4) rendu solidaire en rotation de l'arbre d'entraînement (6) de la pompe hydraulique (5). Les deux pignons coaxiaux (31, 32) sont solidaires entre eux et mobiles en rotation selon un premier axe (30) parallèle à l'arbre menant (1). Le premier de ces pignons (31) est prévu pour recevoir le mouvement de rotation de l'arbre menant (1) et le second de ces pignons (32) est prévu pour transmettre ce mouvement de rotation au second organe d'entraînement (4). Ce dernier est mobile en rotation selon un axe qui est parallèle à l'axe (60) de rotation de la pompe (5) et concourant audit premier axe (30).

Autrement dit, le module d'entraînement (2) effectuant la liaison des différentes pièces entre elles est conçu pour recevoir un mouvement de rotation via un premier engrenage à axe parallèle et pour transmettre ce mouvement de rotation par l'intermédiaire d'un second engrenage à axe concourant. Ledit premier organe d'entraînement (3) peut consister en dispositif à pignon double ou diabolo, le premier pignon (31) étant doté par exemple d'une denture droite ou hélicoïdale adaptée pour coopérer avec le pignon (10) et recevoir dans un premier rapport de vitesses déterminé le mouvement de rotation de l'arbre menant (1), tandis que le second pignon (32) est doté par exemple d'une denture conique ou spiroconique adaptée pour coopérer avec la denture du pignon (40) et transmettre dans un second rapport de vitesses déterminé le mouvement de rotation reçu par l'intermédiaire du premier pignon (31). La denture hélicoïdale ou droite est menante pour le module d'entraînement (2). De manière équivalente, ladite transmission du mouvement de rotation peut être permise par le fait que le second pignon (32) est solidaire ou confondu avec le second organe d'entraînement (4). Un entraînement en rotation de la pompe est ainsi obtenu par la transmission de type angulaire.

En référence à la figure 1, le premier organe d'entraînement (3) comprend sur le premier pignon (31) une denture ayant un diamètre déterminé (D1) permettant l'engrenage avec un pignon (10) de l'arbre menant (1), et sur le second pignon (32), une denture ayant un diamètre (D2) déterminé inférieur au diamètre du premier pignon permettant l'engrenage avec un pignon (40) du second organe d'entraînement (4). Grâce aux dimensions réduites du second pignon (32), le premier organe d'entraînement (3) peut comporter des pignons (31, 32) très rapprochés, par exemple dans des plans parallèles respectifs adjacents. Ledit second pignon (32) à denture conique ou spiroconique constitue un pignon d'entrée conique dont la denture est conjuguée avec la denture du pignon (40) de sortie conique du second organe d'entraînement (4). En faisant varier les diamètres (D1, D2), il est possible de modifier le rapport de démultiplication ou surmultiplication.

En référence à la figure 2B, chacun des organes d'entraînement (3, 4) le module d'entraînement (2) peut être guidé en rotation par utilisation d'un roulement à aiguilles. Avec une forme allongée, ce type de roulement permet de supporter de fortes charges radiales dans un encombrement très réduit. Afin d'accepter également une charge axiale, il peut être prévu une combinaison de roulements, composés d'une butée à aiguilles (34, 44) et d'une cage ou douille à aiguilles (33, 43) Naturellement, le guidage en rotation peut également s'effectuer à l'aide d'une bague ou tout autre système de guidage en rotation. Le guidage axial s'effectue par des systèmes à butée (34, 44) et/ou par utilisation de rondelles d'appui. Dans l'exemple de la figure 2B, le module d'entraînement (2) est doté de moyens de support (20) comprenant, une première partie support (21) pour porter ledit premier organe d'entraînement (3) et une seconde partie support (22) pour porter le second organe d'entraînement (4). Ces parties support respectives (21, 22) sont par exemple prévues pour coopérer par contact avec des systèmes respectif de guidage en rotation des organes d'entraînement (3, 4).

En référence à la figure 2A, la première partie support (21) s'étend dans un premier plan (P1) orthogonal aux pignons (31, 32), tandis que la seconde partie support (22) s'étend dans un second plan (P2) transversal par rapport au premier plan (P1) Ces plans (P1, P2) sont perpendiculaires dans un mode de réalisation préféré de l'invention. Un réglage axial peut être effectué pour les organes d'entraînement respectifs (3, 4) du module d'entraînement (2). Pour cela, la première partie support (21) comprend au moins un élément de butée (34) à position axiale réglable, par exemple à l'aide d'une rondelle de réglage (35) adjacente à la butée, comme illustré à la figure 2B. La butée (34) et la rondelle sont disposées à l'extrémité libre de la première partie support (21), la rondelle étant placée entre les pignons (31, 32) du premier organe d'entraînement (3) et la butée (34). La présence d'une telle butée (34) permet de guider axialement le second pignon (32) du premier organe d'entraînement (3). De façon similaire, la seconde partie support (22) peut comprendre au moins un élément de butée (44) à position axiale réglable pour guider axialement un pignon (40) du second organe d'entraînement (4). Une rondelle de réglage (45) adjacente à la butée (44) peut être également disposée de façon analogue à des fins de guidage axial, avec un fonctionnement analogue à celui déjà décrit. Des ajustements du couple conique peuvent donc être réalisés grâce à ce système de cale qui assure également les fonctions de butée.

Comme représenté à la figure 2B, les moyens de support (20) comportent une portion (23) pour relier lesdites première et secondes parties support (21, 22) et ayant avec ces parties support (21, 22) un profil en L. La première partie support (21) peut comporter une portion formant gorge ou tout autre système permettant d'arrêter axialement l'engrenage, cette portion étant par exemple délimitée par les systèmes de butée et par un épaulement pour recevoir le premier organe d'entraînement (3). Dans un mode de réalisation de l'invention, les première et seconde partie support (21, 22) sont aussi rattachées par l'intermédiaire d'un ensemble bras (24, 25) et plate-forme (26) des moyens de support (20). La plate-forme (26) illustré à la figure 2A constitue un support pour le pignon de sortie (40) du module d'entraînement (2). Le bras (24, 25) peut comporter deux membres (24, 25) sensiblement aplatis coplanaires orthogonaux entre eux. Un premier membre (24) parallèle aux pignons (31, 32) du premier organe d'entraînement (3) est solidaire de la portion (23) et s'étend radialement. Un second membre (25) fixé au premier membre (24) s'étend suivant la direction de l'axe de rotation du second organe d'entraînement (4) pour rejoindre une plate-forme (26) orthogonale au second membre et accueillant à travers une ouverture le second organe d'entraînement (4). Ce dernier s'étend de part et d'autre de la plate-forme (26). Au-dessus de la plate-forme (26) s'étend la partie dite supérieure du second organe d'entraînement (4) qui comporte le pignon (40) entraîné par le second pignon (32) du premier organe d'entraînement (3). Au-dessous de plate-forme (26) s'étend un corps longitudinal recevant dans une cavité axiale l'arbre d'entraînement (6) de la pompe hydraulique (5).

Dans un mode de réalisation de l'invention, le second organe d'entraînement (4) est rendu solidaire en rotation de l'arbre d'entraînement (6) de la pompe par l'intermédiaire d'un dispositif à cannelure ou rotule à doigt. La rotule peut être de type sphérique ou bombée. L'arbre (6) est par exemple maintenu à ses deux extrémités par des liaisons sphériques à doigt. Le second organe d'entraînement (4) reçoit dans une première cavité axiale cet arbre (6), une seconde cavité axiale opposée de section plus large servant à coopérer avec la seconde partie support (22) des moyens de support (20). Il est prévu dans la première cavité du second organe d'entraînement (4) une forme permettant le rotulage de l'arbre (6) d'entraînement de la pompe (5). Le passage du couple est également permis dans cette première cavité par l'intermédiaire d'une ou plusieurs cannelures intérieures ou autres formes analogues adéquates. L'arbre d'entraînement (6) est relié par son autre extrémité à la pompe hydraulique (5), un dispositif à rotule à doigt ou à cannelures étant également prévu pour réaliser cette liaison.

L'arbre d'entraînement ainsi disposé entre le second organe d'entraînement (4) et la pompe (5) transmet la vitesse angulaire et le couple obtenus en sortie du module d'entraînement (2) à la pompe hydraulique (5). L'axe d'entrée de la pompe possède lui aussi une forme apte à assurer le passage du couple et la transmission du mouvement de rotation. Le dispositif à rotule à doigt, avec une rotule de type sphérique ou bombée, offre des degrés de liberté angulaire et d'alignement entre l'arbre d'entraînement (6) de la pompe hydraulique (5) et l'axe de rotation du second organe d'entraînement (4). L'agencement de l'invention peut donc fonctionner avec des défauts angulaires et d'alignement liés aux tolérances de fabrication de l'agencement lui-même ou du carter ou pièce équivalente recevant l'agencement. On comprend que la liaison réalisée avec l'agencement selon l'invention entre l'organe d'entraînement (4) à pignon de sortie conique (40) et la pompe hydraulique (5) peut être une liaison de type homocinétique.

Les orientations des hélices et la géométrie des différentes dentures de type spiroconique et hélicoïdale sont choisies de manière à ce que les efforts soient repris par les butées (34, 44) axiales prévues sur les extrémités libres des premières et seconde partis support (21, 22).

Un des avantages de l'agencement selon l'invention est de placer l'axe de rotation de la pompe de manière sensiblement orthogonale par rapport à l'arbre d'entrée, de façon à positionner cette pompe à un autre endroit qu'à une extrémité longitudinale de la boîte de vitesse et réduire ainsi l'encombrement en longueur de la boîte de vitesses.

Une boîte de vitesses de liaison entre un arbre de sortie (au moins) d'un moteur et un arbre de sortie de la boîte de vitesses, du type comprenant une pompe hydraulique (5) et un carter incorporant des arbres à engrenages selon au moins un axe longitudinal parallèle à un arbre de sortie du moteur, peut donc être conçue de façon originale avec un carter d'encombrement optimisé en intégrant l'agencement de l'invention pour entraîner en rotation la pompe hydraulique (5), cette dernière étant alors disposée dans une direction à composante radiale par rapport à l'axe longitudinal de la boîte de vitesse.

Il doit être évident pour les personnes versées dans l'art que la présente invention permet des modes de réalisation sous de nombreuses autres formes spécifiques sans l'éloigner du domaine défini par la portée des revendications jointes, et l'invention ne doit pas être limitée aux détails donnés ci-dessus.

## Revendications

1. Agencement pour entraîner en rotation une pompe hydraulique (5) dans une boîte de vitesse d'automobile, comprenant un module d'entraînement (2) apte à permettre la liaison dans la boîte de vitesse entre un arbre menant (1) et une pompe hydraulique (5) du type rotative autour d'un axe (60) aligné avec un arbre d'entraînement (6) de la pompe hydraulique (5), **caractérisé en ce que** le module d'entraînement (2) est disposé dans un carter de la boîte de vitesse et comporte un premier organe d'entraînement (3) disposant de deux pignons coaxiaux (31, 32) solidaires entre eux et mobiles en rotation selon un premier axe (30) parallèle à l'arbre menant (1), le premier de ces pignons (31) étant prévu pour recevoir le mouvement de rotation de l'arbre menant (1) et le second de ces pignons (32) étant prévu pour transmettre ce mouvement de rotation à un second organe d'entraînement (4) dudit module (2) qui est mobile en rotation selon un axe parallèle à l'axe (60) de rotation de la pompe (5) et concourant audit premier axe (30), le second organe d'entraînement (4) étant rendu solidaire en rotation de l'arbre d'entraînement (6) de la pompe hydraulique (5).

2. Agencement selon la revendication 1, dans lequel le module d'entraînement (2) comprend un support (21, 22, 23) en L, le premier organe d'entraînement (3) étant monté autour d'une première partie support (21) du support (21, 22, 23) en L, le second organe d'entraînement (4) étant monté autour d'une seconde partie support (22) du support (21, 22, 23) en L.

3. Agencement selon la revendication 2, dans lequel le module d'entraînement (2) est doté de moyens de support (20) comprenant, dans un premier plan (P1) orthogonal aux pignons (31, 32), ladite première partie support (21) permettant de porter ledit premier organe d'entraînement (3) et, dans un second plan (P2) transversal par rapport au premier plan (P1), ladite seconde partie support (22) permettant de porter le second organe d'entraînement (4).

4. Agencement selon une des revendications 1 à 3, dans lequel le premier organe d'entraînement (3) est du type à pignon double ou diabolo et comprend sur son premier pignon (31) une denture droite ou hélicoïdale adaptée pour recevoir dans un premier rapport de vitesses déterminé le mouvement de rotation de l'arbre menant (1) et sur son second pignon (32) une denture conique ou spiroconique adaptée pour transmettre dans un second rapport de vitesses déterminé le mouvement de rotation reçu par l'intermédiaire du premier pignon (31).

5. Agencement selon une des revendications 1 à 4, dans lequel le premier organe d'entraînement (3) comprend sur le premier pignon (31) une denture ayant un diamètre déterminé (D1) permettant l'engrenage avec un pignon (10) de l'arbre menant (1), et sur le second pignon (32), une denture ayant un diamètre (D2) déterminé, inférieur au diamètre (D1) du premier pignon (31), permettant l'engrenage avec un pignon (40) du second organe d'entraînement (4).

6. Agencement selon une des revendications 3 à 5, dans lequel les moyens de support (20) comportent une portion (23) pour relier lesdites première et secondes parties support (21, 22) et ayant avec ces dernières un profil en L.

7. Agencement selon une des revendications 3 à 6, dans lequel la première partie support (21) comprend au moins un élément de butée (34) à position axiale réglable pour guider axialement les pignons (31, 32) du premier organe d'entraînement (3).

8. Agencement selon une des revendications 5 à 7, dans lequel la seconde partie support (22) comprend au moins un élément de butée (44) à position axiale réglable pour guider axialement le pignon (40) du second organe d'entraînement (4).

9. Agencement selon une des revendications 1 à 8, dans lequel le second organe d'entraînement (4) est rendu solidaire en rotation de l'arbre d'entraînement (6) de la pompe hydraulique (5) par l'intermédiaire d'un dispositif à rotule sphérique permettant des degrés de liberté angulaire et d'alignement entre l'arbre d'entraînement (6) de la pompe hydraulique (5) et l'axe de rotation du second organe d'entraînement (4), un dispositif à rotule sphérique étant également prévu pour la liaison entre la pompe (5) et son arbre d'entraînement (6).

10. Boîte de vitesses de liaison entre au moins un arbre de sortie d'un moteur et un arbre de sortie de la boîte de vitesses, comprenant une pompe hydraulique (5) et un carter incorporant des arbres à engrenages selon au moins un axe longitudinal (1) parallèle à un arbre de sortie du moteur, **caractérisée en ce que** le carter est doté de l'agencement selon une des revendications 1 à 9 pour entraîner en rotation la pompe hydraulique (5), de façon à disposer ladite pompe (5) dans une direction à composante radiale par rapport à l'axe longitudinal (1).
